# EUROPEAN PATENT SPECIFICATION

(11) **EP 2 910 808 B1**
(45) Date of publication and mention of the grant of the patent: **19.06.2019**
(21) Application number: 13846385.6
(22) Date of filing: 18.10.2013
(51) Int. Cl.: F16D 23/06, F16D 23/02

(54) **TRANSMISSION SYNCHRONIZING DEVICE**
SYNCHRONISIEREN ÜBERTRAGUNG VORRICHTUNG
DISPOSITIF DE SYNCHRONISATION DE TRANSMISSION

(30) Priority: 19.10.2012 JP 2012231447
(43) Date of publication of application: 26.08.2015
(73) Proprietor: Aisin AI Co., Ltd., Nishio-shi, Aichi 445-0006 (JP)
(72) Inventor: KAWAMOTO, Mitsugu, Nishio-shi Aichi 445-0006 (JP); HANYU, Susumu, Nishio-shi Aichi 445-0006 (JP); KATO, Hiroyuki, Nishio-shi Aichi 445-0006 (JP)
(74) Representative: TBK
(86) International application number: PCT/JP2013/006182
(87) International publication number: WO 2014/061278

(56) References cited:
- DE-T5-112008 001 525
- JP-A- 2000 329 159
- JP-A- 2010 286 029
- JP-B2- 4 570 110
- JP-U- H0 462 926
- JP-Y2- 2 510 860
- US-A- 3 290 918
- US-A- 5 960 925
- US-A1- 2012 211 320
- US-B1- 6 370 979

## Description

### Technical Field

The present invention relates to a synchronizing device for a transmission, more particularly, for a synchronizing device for a transmission that improves shift operability.

### Background Art

In a transmission employing a synchromesh mechanism, a sleeve engaging, via a spline or the like, with a clutch hub rotating at a same speed as a rotation shaft advances along an axial direction to apply a frictional force, via a conical synchronizer ring, to one of idler gears rotatably attached to the rotation shaft to reduce the difference in rotational speed between the idler gear and the sleeve to zero, and the sleeve further advances along the axial direction to mesh with the idler gear to be in synchronization therewith.

By manipulating a shift lever, the sleeve advances along the axial direction to synchronize the rotation, via the synchronizer ring, with the gear, and then to mesh the spline of the sleeve with the spline of the gear.

To mesh the spline of the sleeve with the spline of the gear smoothly, a chamfer is formed on each of the ends of the spline of the sleeve and the spline of the gear that face each other. A chamfer is also formed on the end of the spline of the synchronizer ring.

In a conventional synchronizing device for a transmission, to avoid various problems, the distal end of the chamfer of the synchronizer ring is cut to form a face that avoids making contact with the edge of the chamfer of the sleeve, as disclosed in Patent Literature 1. Such configuration is employed because when the chamfer of the synchronizer ring is abraded and the chamfer angle thereof decreases, the balk ratio changes to cause gear noises. Since the distal end of the chamfer of the synchronizer ring is cut to form the face that avoids making contact with the edge of the chamfer of the sleeve, the decrease in the angle of the chamfer of the synchronizer ring is prevented, thereby preventing the occurrence of gear noises.

In Patent Literature 2, the chamfer of the synchronizer ring has different ridge angles for portions sectioned by a boundary provided at a predetermined height from the root of the spline. By configuring the synchronizer ring to have a positive ridge angle in a radially inner side smaller than that of a radially outer side and greater than 0, the intersection point of a boundary ridge and a distal ridge, or a distal point, projects toward the sleeve. As a result, the edge of the chamfer of the sleeve avoids being abraded by the chamfer of the synchronizer ring, so that a resistance force produced when the sleeve pushes through the synchronizer ring is reduced, thereby reducing the force for operating the sleeve.

In Patent Literature 3, a sleeve, a gear, and a synchronizer ring are provided with different ridge angles. As a result, the chamfer of the sleeve contacts the chamfer of the synchronizer ring at a different location from where the chamfer of the sleeve contacts the chamfer of the gear, which prevents uneven wear of the sleeve and improves durability.

The ridge angle of the chamfer of the synchronizer ring is provided larger than the ridge angle of the chamfer of the sleeve. So that the tooth of the sleeve contacts the root of the tooth of the synchronizer ring, which prevents damaging of the synchronizer ring and improves durability.

The sleeve and the gear have different edge angles for chamfers, and on the chamfer with a smaller edge angle, an R-face is formed along the edge. Furthermore, an R-face is provided on the outer tip of the ridge of the chamfer of the gear. As a result, the coefficient of friction between the sleeve and the gear and therefore "the force required to push-through the gear" decreases, thereby improving the shift operability.

Furthermore, the chamfer of the gear has two ridge angles which change at midway the ridge, so as that the ridge angle of the chamfer in radially outer side and the ridge angle of the chamfer of the sleeve are approximately identical. This allows the chamfer in radially outer side to make a surface contact with the chamfer of the sleeve, thereby preventing uneven wear of the gear, improving synchronizing performance, and preventing the damage to the synchronizer ring.

Patent Literature 4 discloses a synchronizing apparatus for transmissions and a method of manufacturing a synchronizing member. The synchronizing member is adapted to be shifted along a shift direction during gearshift. The synchronizing member has teeth protruding from a synchronizing member surface. The teeth have a trapezoidal cross-section along a direction perpendicular to the shift direction and are configured with a tip along the shift direction. A front apex line of the tip projects under a first angle from the synchronizing member surface. The tip is constituted by two inclined front surfaces extending on both sides of the apex line. The front surfaces intersect under a second angle in an upper tooth surface. For making the second angle as small as possible the front surfaces are provided with an upper section canted away from the tip.

### Citation List

### Patent Literatures

Patent Literature 1: JP 2000-329159 APatent Literature 2: JP 4 570 110 BPatent Literature 3: JP 2 510 860 U
Patent Literature 4: US 5 960 925 A

### Summary of the Invention

### Technical Problem

In the art disclosed in Patent Literature 1, a chamfer of a synchronizer ring is cut to form a face that avoids making contact with an edge of a chamfer of the sleeve. Thus, the edge of the chamfer of the sleeve avoids making contact with the chamfer of the synchronizer ring. Although, since the chamfer of the synchronizer ring has a constant ridge angle from the root to the top of the chamfer, the chamfer of the sleeve slides against the chamfer of the synchronizer ring making a surface contact, when the sleeve pushes through the synchronizer ring. So that a large slide resistance is produced when the sleeve pushes through the synchronizer ring. Moreover, the edge of the chamfer of the sleeve might cut into the chamfer of the synchronizer ring. Thus, to improve the shift operability, the state of contact between chamfers causing the trouble should be solved.

In the art disclosed in Patent Literature 2 and Patent Literature 3, the edge of the chamfer of the sleeve contacts, at an initial state of synchronization, with the boundary ridge of the chamfer of the synchronizer ring, and with keeping this state, the sleeve pushes through the synchronizer ring. Since the contact is made at the boundary ridge, the resistance force produced when the sleeve slides is small, which reduces the shift impulse.

The shift impulse represents the shift operability of the transmission, which is a multiple of the operation time and the operation force. For a smaller value of the shift impulse, the shift operability is better. Thus, the shift impulse is further to be reduced to improve shift operability.

The present invention is made in view of the aforementioned problem. The invention is directed to provide a synchronizing device for a transmission configured with a small push-through stroke of a synchronizer ring to improve shift operability.

### Solution to Problem

The problem is solved by a synchronizing device for a transmission according to claim 1. The synchronizing device includes a hub provided on an outer circumference of a rotation shaft and configured to integrally rotate with the rotation shaft, a gear disposed on a side or both sides of the hub and configured to rotate relative to the rotation shaft, an annular sleeve which is provided on an outer circumference of the hub, includes on an inner circumference thereof a spline that restricts the sleeve from rotating relative to the hub but allows the sleeve to move in an axial direction, and is configured to couple with the gear by moving along the axial direction to mesh the spline with a spline formed on the gear, and an annular synchronizer ring which is disposed between the hub and the gear, includes on an outer circumference thereof a spline, and is assembled so as to rotate relative to the hub by a predetermined angle. A chamfer is provided on each of ends of the spline of the sleeve and the spline of the gear that face each other, and is also provided on an end, close to the hub, of the spline of the synchronizer ring. A distal end of the chamfer of the synchronizer ring has a face configured to avoid making contact with an edge of the chamfer of the sleeve, and is formed in a trapezoidal shape in a plan view perpendicular to a plane normal to a rotational axis. The distal end of the chamfer of the synchronizer ring has a first chamfer in a radially outer side and a second chamfer that has a smaller ridge angle than the first chamfer in a radially inner side of a boundary ridge, where the boundary ridge is provided at a predetermined height from a root of the spline of the synchronizer ring, and the distal end of the chamfer of the synchronizer ring is formed in a trapezoidal shape in a side view perpendicular to a plane normal to the rotational axis.

A balk radius at which the ridge angle of the chamfer of the synchronizer ring changes is preferably larger than the inner radius of the sleeve.

The ridge angle of the first chamfer of the synchronizer ring is preferably larger than the ridge angle of the chamfer of the sleeve.

The difference between the ridge angle of the first chamfer of the synchronizer ring and the ridge angle of the chamfer of the sleeve is preferably from 0.1° to 30°.

The ridge angle of the second chamfer of the synchronizer ring is preferably smaller than the ridge angle of the chamfer of the sleeve.

The difference between the ridge angle of the second chamfer of the synchronizer ring and the ridge angle of the chamfer of the sleeve is preferably from 0.1° to 10°.

Each ridge of the chamfer of the synchronizer ring is preferably formed in an R-curve with a radius of 0.1 mm to 10 mm.

### Advantageous Effects of Invention

According to the present invention, the stroke by which the chamfer of the sleeve pushes through the chamfer of the synchronizer ring (referred to as "push-through stroke") when the sleeve pushes through the synchronizer ring can be reduced because the chamfer of the synchronizer ring is formed in a trapezoidal shape in a plan view perpendicular to a plane normal to the rotational axis. Accordingly, the push-through impulse is reduced, and the shift operability improves. Furthermore, by reducing the push-through stroke, the shift impulse is also reduced.

Since a face is formed on the distal end of the chamfer of the synchronizer ring, the stress concentration at the root of the tooth of the synchronizer ring produced during the push-through is reduced. Thus, the strength of the spline of the synchronizer ring increases. Formed in a trapezoidal shape, the chamfer of the synchronizer ring is small in size, thereby reducing the amount of material and cost.

Furthermore, the amount of the spline of the sleeve pushing through the spline of the synchronizer ring (also referred to as "push-through amount") can be reduced. Thus, the degree of rotation, relative to the hub, of the synchronizer ring which the index part allows is reduced, and the wear of the index part due to "hitting" caused by the change in the rotational speed of the engine is lessened. This improves the durability of the index part.

Since the chamfer of the synchronizer ring is formed in a trapezoidal shape in a side view perpendicular to a plane normal to the rotational axis, the intersection point, and the portion in proximity thereto, of the distal end face of the chamfer of the synchronizer ring and the boundary ridge dividing the first chamfer and the second chamfer contact the chamfer of the sleeve. In this manner, the intersection point and the portion in proximity thereto slide against the chamfer of the sleeve. Thus the frictional resistance is smaller than when the edge of the chamfer of the sleeve abrades the synchronizer ring, and the push-through force is reduced, thereby improving the shift operability.

Furthermore, since the balk radius of the synchronizer ring is larger than the inner radius of the sleeve, the intersection point, and the portion in proximity thereto, of the distal end face of the synchronizer ring and the boundary ridge dividing the first chamfer and the second chamfer surely contact the chamfer of the sleeve. This eliminates the motion causing the edge of the chamfer of the sleeve abrading the synchronizer ring, and thus the frictional resistance and the push-through force are reduced, thereby improving the shift operability.

The ridge angle of the first chamfer of the synchronizer ring is larger than the ridge angle of the chamfer of the sleeve, so that an escaping-shape is formed that avoids the first chamfer making contact with the edge of the chamfer of the sleeve. Formed in such a shape, the intersection point, and the portion in proximity thereto, of the distal end face of the chamfer of the synchronizer ring and the boundary ridge dividing the first chamfer and the second chamfer contact the chamfer of the sleeve. This avoids the motion causing the edge of the chamfer of the sleeve abrading the synchronizer ring, and thus the frictional resistance and the push-through force are reduced, thereby improving the shift operability.

Since the difference between the ridge angle of the first chamfer of the synchronizer ring and the ridge angle of the chamfer of the sleeve is from 0.1° to 30°, the intersection point, and the portion in proximity thereto, of the distal end face of the chamfer of the synchronizer ring and the boundary ridge dividing the first chamfer and the second chamfer can surely contact the chamfer of the sleeve. In this manner, the edge of the chamfer of the sleeve is prevented from cutting into the chamfer of the synchronizer ring.

The ridge angle of the second chamfer of the synchronizer ring is smaller than the ridge angle of the chamfer of the sleeve, so that the escaping-shape is formed that avoids the second chamfer making contact with the edge of the chamfer of the sleeve. Formed in such a shape, the intersection point, and the portion in proximity thereto, of the distal end face of the chamfer of the synchronizer ring and the boundary ridge dividing the first chamfer and the second chamfer contact the chamfer of the sleeve. This avoids the motion causing the edge of the chamfer of the sleeve abrading the synchronizer ring, and thus the frictional resistance and the push-through force are reduced, thereby improving the shift operability.

Since the difference between the ridge angle of the second chamfer of the synchronizer ring and the ridge angle of the chamfer of the sleeve are from 0.1° to 10°, the intersection point, and the portion in proximity thereto, of the distal end face of the chamfer of the synchronizer ring and the boundary ridge dividing the first chamfer and the second chamfer can surely contact the chamfer of the sleeve. In this manner, the edge of the chamfer of the sleeve is prevented from cutting into the chamfer of the synchronizer ring.

### Brief Description of Drawings

Fig. 1 is a sectional view schematically illustrating a synchronizing device for a transmission according to one embodiment of the present invention.
Fig. 2 is a side view illustrating a chamfer of a synchronizer ring making contact with a chamfer of a sleeve.
Fig. 3 is a perspective view schematically illustrating a chamfer of a spline of the synchronizer ring.
Fig. 4 is a plan view illustrating a chamfer of the synchronizer ring making contact with a chamfer of the sleeve.
Fig. 5(A) is a sectional view taken along line I-I in Fig. 1 viewing from the right-hand side, or a side view illustrating an index part taken along arrow VB-VB in Fig. 5(B).
Fig. 5(B) is a plan view of the index part of a hub in Fig. 5(A) viewed from above.
Fig. 6(A) is a plan view illustrating a push-through stroke by which a chamfer of a conventional sleeve pushes through a chamfer of the synchronizer ring.
Fig. 6(B) is a plan view illustrating a push-through stroke by which the chamfer of the sleeve according to the embodiment pushes through the chamfer of the synchronizer ring.
Fig. 7 (A) is a plan view illustrating a push-through amount by which a chamfer of a conventional sleeve pushes through a chamfer of a synchronizer ring.
Fig. 7(B) is a plan view illustrating a push-through amount by which the chamfer of the sleeve according to the embodiment pushes through the chamfer of the synchronizer ring.
Fig. 8(A) is a plan view illustrating a chamfer of a conventional synchronizer ring being pushed through by a sleeve having a chamfer with an acute edge angle.
Fig. 8(B) is a plan view illustrating the chamfer of the synchronizer ring according to the embodiment being pushed through by the sleeve.

### Description of Embodiments

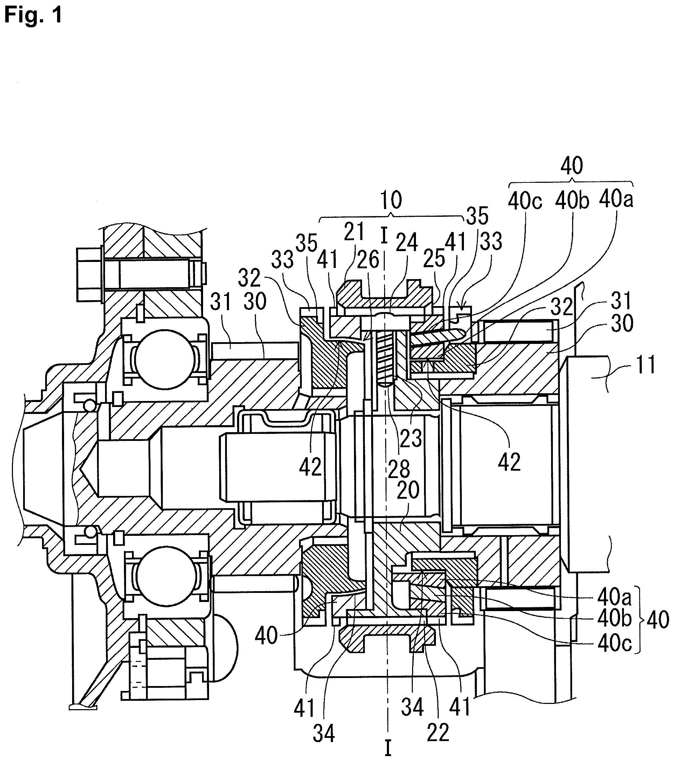

Referring to an embodiment illustrated in the drawings, a synchronizing device for a transmission according to the present invention will further be described in detail. Fig. 1 schematically illustrates a synchronizing device for a transmission according to one embodiment of the present invention.

A synchronizing device 10 for a transmission according to the embodiment includes a hub 20 which is provided on the outer circumference of a rotation shaft 11 to integrally rotate with the rotation shaft 11 and gears 30 provided on both sides of the hub 20 on the outer circumference of the rotation shaft 11. A spline restricts the hub 20 from rotating relative to the rotation shaft 11 but allows the hub 20 to slide along an axial direction. The gears 30 are allowed to rotate relative to the rotation shaft 11.

Synchronizing mechanisms of the hub 20 and the gear 30 on both sides have similar structures, so that only one of the two synchronizing mechanisms will be explained and the description on the other mechanism will be omitted.

The gear 30 has a tooth-portion 31 formed on the outer circumference thereof. The piece gear 32 is integrally provided to the gear 30 at a side close to the hub 20. A spline 33 is formed on the outer circumference of the piece gear 32, and a conical face 34 is formed on the piece gear 32 so as to face the hub 20.

An annular sleeve 21 having a spline 22 on the inner circumference thereof is provided on the outer circumference of the hub 20. The spline 22 restricts the sleeve 21 from rotating relative to the hub 20 but allows the sleeve 21 to slide in the axial direction. When a shift lever is operated to axially move the sleeve 21, the spline 22 meshes with a spline 33 formed on the piece gear 32 and thereby the sleeve 21 couples with the gear 30.

A plurality of keys 24 positioned at a plurality of predetermined circumferential locations is pushed outward by springs 23 disposed in holes 28 provided in the outer periphery of the hub 20 to mesh with the inner circumference of the sleeve 21. In Fig. 1, only one of the plurality of keys 24 is illustrated.

An annular synchronizer ring 40 is disposed at each of two spaces between the hub 20 and the piece gear 32 of the gear 30. The synchronizer ring 40 is held with the keys 24 inserted in grooves 26 provided in the synchronizer ring 40, and the groove 26 and the key 24 inserted therein have a gap therebetween. According to the circumferential location and the length of the grooves 26, the synchronizer ring 40 is allowed to rotate within a range of a predetermined angle relative to the hub 20 and the sleeve 21.

In Fig. 1, the synchronizer ring 40 located in the right hand side of the hub 20 is composed of an inner ring 40a positioned at the innermost, a middle ring 40b positioned at a middle, and an outer ring 40c positioned at the outermost. The synchronizer ring is not limited to a multi-synchronizer ring and may be a single synchronizer ring.

On the outer circumference of the synchronizer ring 40, a spline 41 configured to mesh with the spline 22 of the sleeve 21 is provided. On the inner circumference of the synchronizer ring 40, a conical face 42 that makes contact with the conical face 34 of the piece gear 32 is formed.

A chamfer 25 and a chamfer 35 are provided on opposing ends of the spline 22 of the sleeve 21 and the spline 33 of the piece gear 32, respectively. The end of the spline 41, close to the hub 20, of the synchronizer ring 40 is also provided with a chamfer.

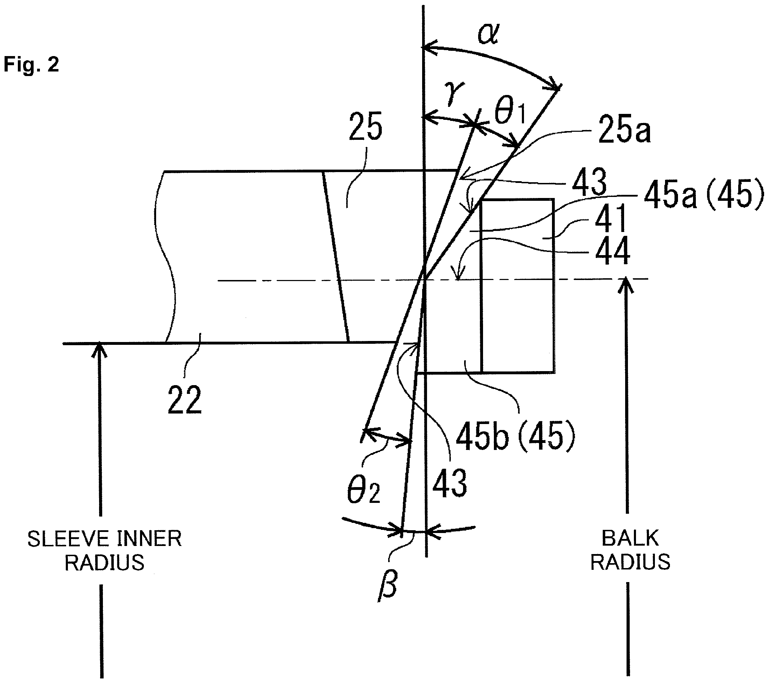

Each tooth of the spline 22 has a pair of chamfers 25, that is, chamfers symmetrically provided about the center line of the spline 22 perpendicular to the width direction of the tooth. Distal ridges 25a of the pair of chamfers are inclined so as the radially outer portion (upper portion in Fig. 2) to project toward the gear 30.

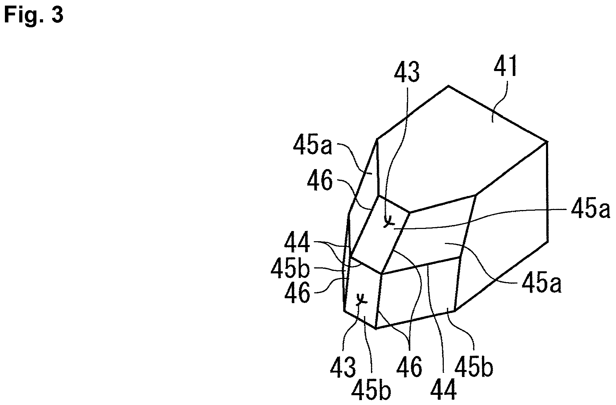

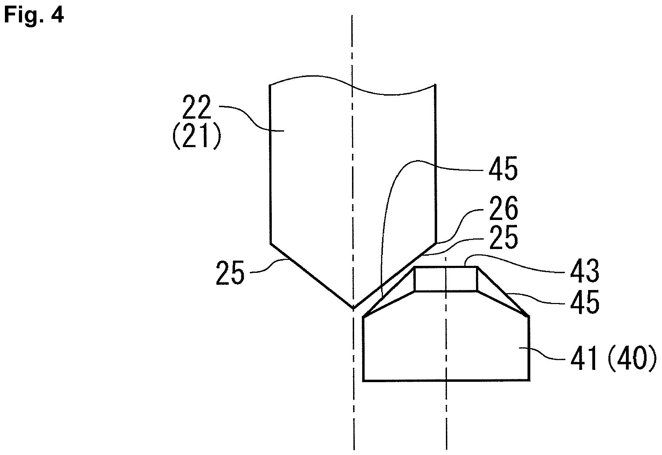

On the distal end of the chamfer 45 of the synchronizer ring 40, a face 43 that avoids making contact with the edge 26 of the chamfer 25 of the sleeve 21 is provided as illustrated in Figs. 3 and 4. As illustrated in Fig. 4, a trapezoidal shape is formed in a plan view perpendicular to a plane normal to the rotational axis.

Furthermore, as illustrated in Figs. 2 and 3, the distal end of the chamfer 45 of the synchronizer ring 40 has a first chamfer 45a in the radially outer side and a second chamfer 45b in the radially inner side of a boundary ridge 44, where the boundary ridge 44 is provided at a predetermined height from the root of the spline 41. A ridge angle β of the second chamfer 45b is smaller than a ridge angle α of the first chamfer 45a. As illustrated in Fig. 2, a trapezoidal shape is formed in a side view perpendicular to a plane normal to the rotational axis.

In the embodiment, the face 43 on the distal end of the chamfer 45 of the synchronizer ring 40 is approximately normal to the axial direction, as illustrated in Fig. 4. Although, if the face 43 is configured not to contact the edge 26 of the chamfer 25 of the sleeve 21, the face 43 may be diagonal to the axial direction.

As illustrated in Fig. 2, the balk radius of the synchronizer ring 40 is larger than the inner radius of the sleeve 21. The balk radius is the radius at which the ridge angle of the chamfer 45 of the synchronizer ring 40 changes.

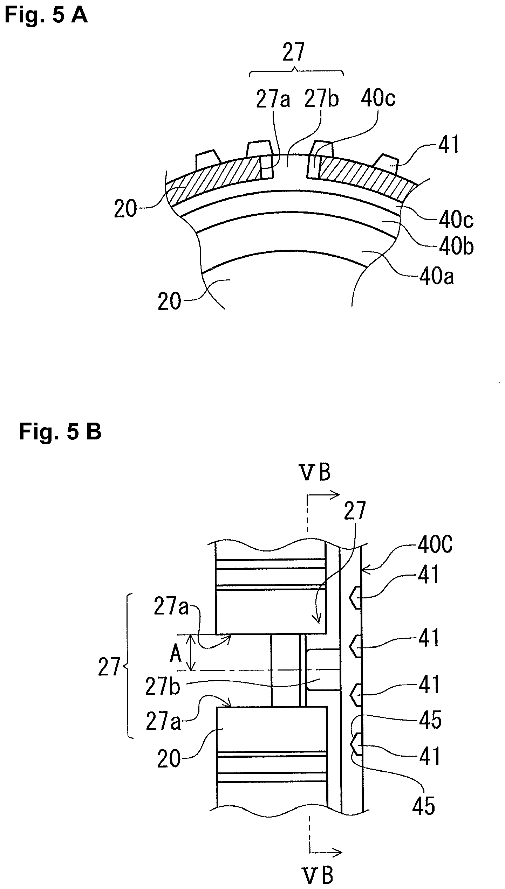

Furthermore, the synchronizing device 10 according to the embodiment includes an index part 27 which determines the relative position of the synchronizer ring 40 to the hub 20, as illustrated in Figs. 5(A) and 5(B). Fig. 5(A) illustrates a portion, particularly the index part 27, in the sectional view taken along line I-I in Fig. 1 viewed from the right hand side. Fig. 5(A) also represents a side view taken along arrow VB-VB in Fig. 5(B) illustrating the index part 27. Fig. 5(B) illustrates an index groove 27a of the hub 20 in Fig. 5 (A) viewed from above.

As for the synchronizer ring 40, for example, the outer ring 40c includes a plurality of index protrusions 27b provided at a plurality of predetermined circumferential locations to protrude toward the hub 20. The hub 20 includes a plurality of index grooves 27a in which the index protrusions 27b is inserted to engage therewith. To allow relative rotation between the synchronizer ring 40 and the hub 20 within a predetermined range (within a range of a predetermined angle), the index groove 27a and the index protrusion 27b engage with a gap A as illustrated in Fig. 5(B).

Now, the operation of the transmission and the synchronizing device 10 will be described.

When a shift lever is operated to axially move the sleeve 21, the force is transferred from the sleeve 21 to the key 24 since the sleeve 21 and the key 24 are engaging via a middle-protrusion, and the conical face 42 of the synchronizer ring 40 is pushed by the key 24 against the conical face 34 of the piece gear 32, thereby producing an initial frictional force. With this frictional force, the synchronizer ring 40 starts rotation relative to the hub 20 and the sleeve 21, and then stops, being pushed at a far end position of the range of a predetermined angle. In this state, the chamfer 45 of the spline 41 of the synchronizer ring 40 is opposing the chamfer 25 of the spline 22 of the sleeve 21 to block the sliding of the sleeve 21.

When the sleeve 21 further advances along the axial direction, the sleeve 21 disengages from the key 24 and then directly pushes the chamfer 45 of the synchronizer ring 40 via the chamfer 25. In this state, the frictional torque produced between the conical face 42 of the synchronizer ring 40 and the conical face 34 of the piece gear 32 should be larger than the push-through torque produced on the chamfer 25 of the sleeve 21. If the frictional torque is smaller than the push-through torque, the synchronization cannot be completed, and the sleeve 21 advances, pushing through the synchronizer ring 40, to produce gear noises. As long as the kinematic friction is produced between the conical faces 34 and 42 until the completion of synchronization, the sliding of the sleeve 21 is prevented and the synchronization is promoted.

When the synchronization is completed, the difference in rotational speed between the sleeve 21 and the gear 30 is zero. Then the frictional torque between the conical face 42 of the synchronizer ring 40 and the conical face 34 of the piece gear 32 decreases, and the sleeve 21 slides to return the synchronizer ring 40, via the chamfer 25, from the far end position of the range of the predetermined angle, thereby meshing with the spline 33 of the piece gear 32.

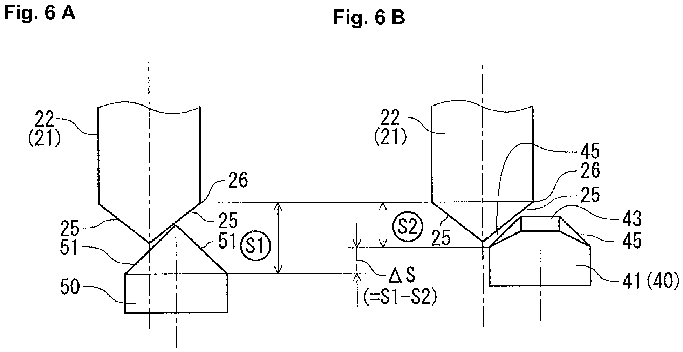

Now, the operation of the sleeve 21 pushing through the synchronizer ring 40 will be described. In the embodiment, since the chamfer 45 of the synchronizer ring 40 is formed in a trapezoidal shape in a plan view perpendicular to a plane normal to the rotational axis, the stroke by which the spline 22 of the sleeve 21 pushes through the spline 41 of the synchronizer ring 40 (referred to as "push-through stroke") can be reduced, as illustrated in Fig. 6.

Figs. 6(A) and 6(B) illustrate how the chamfer 51 of a conventional synchronizer ring 50 or the chamfer 45 of the synchronizer ring 40 according to the embodiment makes contact with the chamfer 25 of the sleeve 21.

From Figs. 6(A) and 6(B), the difference in the push-through strokes ΔS (= S₁ - S₂) can be understood, where S₁ is the push-through stroke of the chamfer 51 of the conventional synchronizer ring 50 illustrated in Fig. 6(A) and S₂ is the push-through stroke of the chamfer 45 of the synchronizer ring 40 according to the embodiment illustrated in Fig. 6(B). The push-through stroke can be reduced by the difference ΔS. Accordingly, by reducing the push-through impulse, the shift operability improves.

The push-through impulse is calculated by multiplying the force acting during the push-through operation by the time during which the force is acting. For a smaller push-through impulse, the shift operability is better.

Since the push-through stroke can be reduced as described above, the shift stroke in the transmission as well as the shift stroke of a knob can be reduced.

During the push-through operation, as for the conventional synchronizer ring 50 illustrated in Fig. 6(A), stress concentration occurs at the distal end of the chamfer 51, but in contrast, for the synchronizer ring 40 according to the embodiment illustrated in Fig. 6(B), stress concentration at the root of the tooth of the synchronizer ring 40 is reduced because of the face 43 formed on the distal end of the chamfer 45. Thus, the durability of the spline 41 increases. Furthermore, since the push-through stroke is reduced, the spline 41 can be made small in size, thereby reducing material and cost.

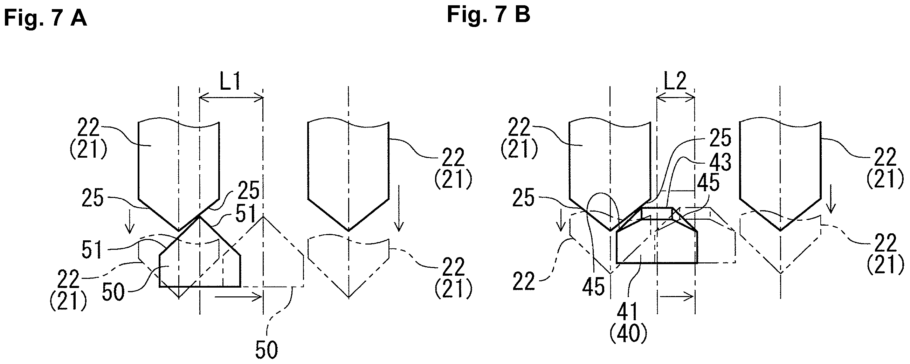

Furthermore, since the chamfer 45 of the synchronizer ring 40 is formed in a trapezoidal shape in a plan view perpendicular to a plane normal to the rotational axis, the amount by which the spline 22 of the sleeve 21 pushes through the synchronizer ring 40 (referred to as "push-through amount") can also be reduced, as illustrated in Figs. 7(A) and 7(B).

Figs. 7(A) and 7(B) illustrate in solid lines how the chamfer 51 of the conventional synchronizer ring 50 or the chamfer 45 of the synchronizer ring 40 according to the embodiment makes contact with the chamfer 25 of the sleeve 21. The state where the push-through operation is complete is illustrated in two-dot chain lines.

As can be understood from Figs. 7(A) and 7(B), the push-through amount L₂ is smaller than the push-through amount L₁, where L₂ is the push-through amount of the chamfer 45 of the synchronizer ring 40 according to the embodiment illustrated in Fig. 7(B) and L₁ is the push-through amount of the chamfer 51 of the conventional synchronizer ring 50 illustrated in Fig. 7(A). As a result, by reducing the push-through impulse, the shift operability improves.

By reducing the push-through amount L₂, the durability of the index part 27 improves.

In the index part 27, the change in rotational speed of the engine causes the index groove 27a of the hub 20 to repetitively hit against the index protrusion 27b of the synchronizer ring 40. Since the gap A is small, the repetitive hitting wears the index part 27. If the contact pressure at the index part 27 is high, the index part 27 significantly wears.

By reducing the push-through amount L₂ as described above, the amount of rotation of the synchronizer ring 40 allowed by the index part 27 is reduced. As a result, the wear of the index groove 27a of the hub 20 and the index protrusion 27b of the synchronizer ring 40 is reduced, and thereby the durability of the index part 27 improves.

To improve the shift operability of the synchronizing device 10 for a transmission, the edge angle of the chamfer 25 of the sleeve 21 may be provided with an acute angle.

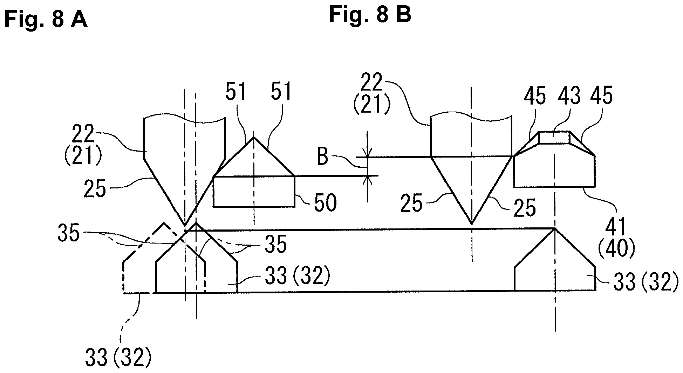

As illustrated in Fig. 8(A), for a chamfer 51 of a conventional synchronizer ring 50 where the push-through stroke is large, before the sleeve 21 completes pushing through the synchronizer ring 50, the sleeve 21 enters the region where the sleeve 21 meshes with the chamfer 35 of the spline 33 of the piece gear 32.

As a result, as illustrated in Fig. 8(A) with the piece gear 32 shown in solid lines, a face of the chamfer 25 of the sleeve 21 makes contact with both the synchronizer ring 50 and the piece gear 32, that is, the push-through of the sleeve 21 is doubled. In this state, the sleeve 21 pushes through both the synchronizer ring 50 and the piece gear 32, thereby receiving a great force.

In another state, as illustrated in Fig. 8(A) with the piece gear 32 shown in two-dot chain lines, the synchronizer ring 50 and the piece gear 32 make contact with different chamfers 25 of the sleeve 21, which causes a shift lock. In this state, the synchronizer ring 50 and the piece gear 32 block the sleeve 21 from pushing through.

As illustrated in Figs. 8(A) and 8(B), in Fig. 8(A), the push-through operation of the conventional synchronizer ring 50 is not completed, but at the same state in Fig. 8(B), the push-through operation of the synchronizer ring 40 according to the embodiment is completed. Thus, when the synchronizer ring 40 according to the embodiment is in the same state as in Fig. 8(A), the distal end of the sleeve 21 is at a location retreating by a distance B, where the distance B is a difference in strokes. Consequently, even when the chamfer 25 of the sleeve 21 is provided with an acute edge angle, the synchronizer ring 40 according to the embodiment can avoid the doubled push-through and the shift lock.

As described above, since the balk radius of the synchronizer ring 40 according to the embodiment is larger than the inner radius of the sleeve 21 as illustrated in Fig. 2, the intersection point, and the portion in proximity thereto, of the face 43 at the distal end of the synchronizer ring 40 and the boundary ridge 44 dividing the first chamfer 45a and the second chamfer 45b surely contact the face of the chamfer 25 of the sleeve 21. As a result, the motion causing the edge of the chamfer 25 of the sleeve 21 abrading the synchronizer ring 40 is avoided, and the push-through force and the push-through impulse are reduced, thereby improving the shift operability.

As illustrated in Fig. 2, the ridge angle α of the first chamfer 45a of the synchronizer ring 40 is larger than the ridge angle γ of the chamfer 25 of the sleeve 21. The ridge angle γ is an angle taken clockwise from the vertical line perpendicular to the axial direction in Fig. 2. The ridge angle γ forms the escaping-shape that avoids, when pushing through the sleeve 21, the first chamfer 45a making contact with the chamfer 25 of the sleeve 21. The escaping-shape allows the intersection point, and the portion in proximity thereto, of the face 43 at the distal end of the synchronizer ring 40 and the boundary ridge 44 dividing the first chamfer 45a and the second chamfer 45b contact the chamfer 25 of the sleeve 21. As a result, the motion causing the edge of the chamfer 25 of the sleeve 21 abrading the synchronizer ring 40 is avoided, and thus the push-through force is reduced, thereby improving the shift operability.

The difference θ₁ (= α - γ) is preferably from 0.1° to 30°, where α is the ridge angle of the first chamfer 45a of the synchronizer ring 40 and γ is the ridge angle of the chamfer 25 of the sleeve 21. Formed in such a shape, the intersection point, and the portion in proximity thereto, of the face 43 at the distal end of the synchronizer ring 40 and the boundary ridge 44 dividing the first chamfer 45a and the second chamfer 45b surely contact the chamfer 25 of the sleeve 21. Furthermore, the intersection point and the portion in proximity thereto are prevented from cutting into the chamfer 25 of the sleeve.

As illustrated in Fig. 2, the ridge angle β of the second chamfer 45b of the synchronizer ring 40 is smaller than the ridge angle γ of the chamfer 25 of the sleeve 21. In this manner, the escaping-shape is formed that avoids the second chamfer 45b making contact with the chamfer 25 of the sleeve 21 when the chamfer 25 of the sleeve 21 pushes through the chamfer 45 of the synchronizer ring 40. The escaping-shape allows the intersection point, and the portion in proximity thereto, of the face 43 at the distal end of the synchronizer ring 40 and the boundary ridge 44 dividing the first chamfer 45a and the second chamfer 45b contact the chamfer 25 of the sleeve 21. As a result, the area that makes contact with the sleeve 21 decreases and therefore the frictional resistance is reduced. The push-through force is thus reduced and the shift operability improves.

The difference θ₂ (= γ - β) is preferably from 0.1° to 10°, where β is the ridge angle of the second chamfer 45b of the synchronizer ring 40 and γ is the ridge angle of the chamfer 25 of the sleeve 21. Formed in such a shape, the intersection point, and the portion in proximity thereto, of the face 43 at the distal end of the synchronizer ring 40 and the boundary ridge 44 dividing the first chamfer 45a and the second chamfer 45b surely contact the chamfer 25 of the sleeve 21. Furthermore, the intersection point and the portion in proximity thereto are prevented from cutting into the chamfer 25 of the sleeve.

Each of the ridges 44 and 46 of the chamfer 45 of the synchronizer ring 40 is preferably formed in an R-curve face with a radius of 0.1 mm to 10 mm. Formed in such a manner, the load is dispersed when the ridges 44 and 46 of the chamfer 45 of the synchronizer ring 40 make contact with the chamfer 25 of the sleeve 21, thereby reducing the frictional resistance and improving the shift operability.

### Reference Signs List

- 10: synchronizing device
- 11: rotation shaft
- 20: hub
- 21: sleeve
- 22: sleeve-side spline
- 23: spring
- 24: key
- 25: chamfer
- 25a: distal ridge
- 26: edge
- 27: index part
- 27a: index groove
- 27b: index protrusion
- 28: hole
- 30: gear
- 31: tooth-portion
- 32: piece gear
- 33: gear-side spline
- 34: conical face
- 35: chamfer
- 40: synchronizer ring (of the embodiment)
- 40a: inner ring
- 40b: middle ring
- 40c: outer ring
- 41: ring-side spline
- 42: conical face
- 43: face
- 44: boundary ridge
- 45: chamfer
- 45a: first chamfer
- 45b: second chamfer
- 46: ridge
- 50: synchronizer ring (conventional)
- 51: chamfer

## Claims

1. A synchronizing device (10) for a transmission comprising:
a hub (20) provided on an outer circumference of a rotation shaft (11) and configured to integrally rotate with the rotation shaft (11);
a gear (30) disposed on a side or both sides of the hub (20) and configured to rotate relative to the rotation shaft (11);
an annular sleeve (21) which is provided on an outer circumference of the hub (20), includes on an inner circumference thereof a spline (22) that restricts the sleeve (21) from rotating relative to the hub (20) but allows the sleeve (21) to move in an axial direction, and is configured to couple with the gear (30) by moving along the axial direction to mesh the spline (22) with a spline (33) formed on the gear (30); and
an annular synchronizer ring (40) which is disposed between the hub (20) and the gear (30), includes on an outer circumference thereof a spline (41), and is assembled so as to rotate relative to the hub (20) by a predetermined angle, wherein
a chamfer (25, 35) is provided on each of ends of the spline (22) of the sleeve (21) and the spline (33) of the gear (30) that face each other, and is also provided on an end, close to the hub (20), of the spline (41) of the synchronizer ring (40),
each spline (22) of the sleeve (21) has a pair of chamfers (25) symmetrically provided about the center line of the spline (22) perpendicular to the width direction, and distal ridges of the pair of chamfers are inclined such that the radially outer portion projects toward the gear,
a distal end of the chamfer (45) of the synchronizer ring (40) has a first chamfer (45a) in a radially outer side of a boundary ridge (44) and a second chamfer (45b) in a radially inner side of a boundary ridge (44), and is formed in a trapezoidal shape in a plan view and in a side view perpendicular to a plane normal to a rotation axis,
the boundary ridge is a boundary between the first chamfer and the second chamfer and is provided at a predetermined height from a root of the spline of the synchronizer ring,
a balk radius at which a ridge angle of a chamfer of the synchronizer ring changes is set larger than an inner radius of the sleeve, so that the vicinity of the intersection of the ridge of the first chamfer and the ridge of the second chamfer and the boundary ridge is brought into contact with the chamfer of the sleeve,
the ridge angle (a) of the first chamfer (45a) of the synchronizer ring (40) is larger than a ridge angle (y) of the chamfer (25) of the sleeve (21), the ridge angle (β) of the second chamfer (45b) of the synchronizer ring (40) is smaller than the ridge angle (y) of the chamfer (25) of the sleeve (21), **characterized in that**
the first chamfer (45a) is formed by three faces (45a, 43, 45a) and having boundaries of the three faces as ridges (46,46),
the second chamfer (45b) is formed by three faces (45b, 43, 45b) and having boundaries of the three faces as the ridges (46, 46), and has a smaller ridge angle (β) than a ridge angle (α) of first chamfer (45a).

2. The synchronizing device (10) for a transmission according to claim 1, wherein
a difference θ1 (= α - γ) between the ridge angle (α) of the first chamfer (45a) of the synchronizer ring (40) and the ridge 5 angle (γ) of the chamfer (25) of the sleeve (21) is preferably from 0.1° to 30°.

3. The synchronizing device (10) for a transmission according to claim 1, wherein
a difference θ2 (= γ - β) between the ridge angle (β) of the second chamfer (45b) of the synchronizer ring (40) and the ridge angle (γ) of the chamfer (25) of the sleeve (21) is preferably from 0.1° to 10°.

4. The synchronizing device (10) for a transmission according to any one of claims 1 to 3, wherein
each ridge of the chamfer (45) of the synchronizer ring (40) is preferably formed in an R-curve with a radius of 0.1 mm to 10 mm.

## Patentansprüche

1. Synchronisationsvorrichtung (10) für ein Getriebe, das Folgendes aufweist:
eine Nabe (20), die an einem Außenumfang einer Drehachse (11) vorgesehen ist und so gestaltet ist, dass sie sich integral mit der Drehachse (11) dreht;
ein Zahnrad (30), das auf einer Seite oder beiden Seiten der Nabe (20) angeordnet und gestaltet ist, um sich relativ zur Drehachse (11) zu drehen;
eine ringförmige Hülse (21), die an einem Außenumfang der Nabe (20) vorgesehen ist, an einem Innenumfang derselben eine Verzahnung (22) aufweist, die die Hülse (21) von der Drehung in Bezug auf die Nabe (20) abhält, der Hülse (21) jedoch erlaubt, sich in axialer Richtung zu bewegen, und die gestaltet ist, um mit dem Zahnrad (30) zu koppeln, indem sie sich entlang der axialen Richtung bewegt, um die Verzahnung (22) mit einer Verzahnung (33) zu verbinden, die an dem Zahnrad (30) ausgebildet ist; und
einen ringförmigen Synchronring (40), der zwischen der Nabe (20) und dem Zahnrad (30) angeordnet ist, an einem Außenumfang davon eine Verzahnung (41) aufweist und derart montiert ist, dass er sich relativ zur Nabe (20) um einen vorbestimmten Winkel dreht, wobei
eine Fase (25, 35) an jedem der einander zugewandten Enden der Verzahnung (22) der Hülse (21) und der Verzahnung (33) des Zahnrads (30) vorgesehen ist, und auch an einem Ende der Verzahnung (41) des Synchronrings (40) in der Nähe der Nabe (20) vorgesehen ist,
jede Verzahnung (22) der Buchse (21) ein Paar von Fasen (25) hat, die symmetrisch um die Mittellinie der Verzahnung (22) senkrecht zu der Breitenrichtung vorgesehen ist, und distale Grate von dem Paar von Fasen derart geneigt sind, dass der radial äußere Abschnitt zu dem Zahnrad hin vorragt,
ein distales Ende der Fase (45) des Synchronrings (40) eine erste Fase (45a) in einer radial äußeren Seite eines Grenzgrats (44) und eine zweite Fase (45b) in einer radial inneren Seite eines Grenzgrats (44) hat und in einer trapezoiden Form in einer Draufsicht und in einer Seitenansicht senkrecht zu einer Ebene normal zu einer Drehachse ausgebildet ist,
der Grenzgrat eine Grenze zwischen der ersten Fase und der zweiten Fase ist und an einer vorbestimmten Höhe von einer Wurzel der Verzahnung des Synchronrings aus vorgesehen ist,
ein Balkenradius, bei dem ein Gratwinkel einer Fase des Synchronrings sich ändert, größer eingestellt ist als ein Innenradius der Hülse, so dass der Nahbereich des Schnittpunkts des Grats der ersten Fase und des Grats der zweiten Fase und der Grenzgrat in Kontakt mit der Fase der Hülse gebracht wird,
der Gratwinkel (α) der ersten Fase (45a) des Synchronrings (40) größer ist als ein Gratwinkel (γ) der Fase (25) der Hülse (21), wobei der Gratwinkel (β) der zweiten Fase (45b) des Synchronrings (40) kleiner ist als der Gratwinkel (γ) der Fase (25) der Hülse (21),
**dadurch gekennzeichnet, dass**
die erste Fase (45a) durch drei Flächen (45a, 43, 45a) ausgebildet ist und Grenzen der drei Flächen als Grate (46, 46) hat,
die zweite Fase (45b) durch drei Flächen (45b, 43, 45b) ausgebildet ist und Grenzen der drei Flächen als die Grate (46, 46) hat und einen kleineren Gratwinkel (β) als einen Gratwinkel (α) der ersten Fase (45a) hat.

2. Synchronisationsvorrichtung (10) für ein Getriebe nach Anspruch 1, wobei
eine Differenz θ1 (= α - γ) zwischen dem Gratwinkel (α) der ersten Fase (45a) des Synchronrings (40) und dem Gratwinkel (γ) der Fase (25) der Hülse (21) vorzugsweise von 0,1° bis 30° beträgt.

3. Synchronisationsvorrichtung (10) für ein Getriebe nach Anspruch 1, wobei
eine Differenz θ2 (= γ - β) zwischen dem Gratwinkel (β) der zweiten Fase (45b) des Synchronrings (40) und dem Gratwinkel (γ) der Fase (25) der Hülse (21) vorzugsweise von 0,1° bis 10° beträgt.

4. Synchronisationsvorrichtung (10) für ein Getriebe nach einem von Ansprüchen 1 bis 3, wobei
jeder Grat der Fase (45) des Synchronrings (40) vorzugsweise in einer R-Kurve mit einem Radius von 0,1 mm bis 10 mm ausgebildet ist.

## Revendications

1. Dispositif de synchronisation (10) pour une transmission comprenant :
un moyeu (20) prévu sur une circonférence externe d'un arbre de rotation (11) et configuré pour tourner de manière solidaire avec l'arbre de rotation (11) ;
un engrenage (30) disposé sur un côté ou des deux côtés du moyeu (20) et configuré pour tourner par rapport à l'arbre de rotation (11) ;
un manchon annulaire (21) qui est prévu sur une circonférence externe du moyeu (20), comprend sur sa circonférence interne, une cannelure (22) qui empêche le manchon (21) de tourner par rapport au moyeu (20) mais permet au manchon (21) de se déplacer dans une direction axiale, et est configurée pour se coupler avec l'engrenage (30) en se déplaçant le long de la direction axiale afin d'engrener la cannelure (22) avec une cannelure (33) formée sur l'engrenage (30) ; et
une bague de synchroniseur annulaire (40) qui est disposée entre le moyeu (20) et l'engrenage (30), comprend sur sa circonférence externe, une cannelure (41) et est assemblée afin de tourner par rapport au moyeu (20) sur un angle prédéterminé, dans lequel :
un chanfrein (25, 35) est prévu sur chacune des extrémités de la cannelure (22) du manchon (21) et de la cannelure (33) de l'engrenage (30) qui se font face, et est également prévu sur une extrémité, à proximité du moyeu (20), de la cannelure (41) de la bague de synchroniseur (40),
chacune cannelure (22) du manchon (21) a une paire de chanfreins (25) prévus, de manière symétrique, autour de la ligne centrale de la cannelure (22) perpendiculaire au sens de la largeur, et des crêtes distales de la paire de chanfreins sont inclinées de sorte que la partie radialement externe fait saillie vers l'engrenage, une extrémité distale du chanfrein (45) de la bague de synchroniseur (40) a un premier chanfrein (45a) dans un côté radialement externe au niveau d'une crête de limite (44) et un second chanfrein (45b) dans un côté radialement interne d'une crête de limite (44) et est formé selon une forme trapézoïdale sur une vue en plan et sur une vue latérale perpendiculaire à un plan normal par rapport à un axe de rotation,
la crête de limite est une limite entre le premier chanfrein et le second chanfrein et est prévue à une hauteur prédéterminée à partir d'une emplanture de la cannelure de la bague de synchroniseur, un rayon de poutre auquel un angle de crête d'un chanfrein de la bague de synchroniseur est déterminé pour être supérieur à un rayon interne du manchon, de sorte que la proximité de l'intersection de la crête du premier chanfrein et de la crête du second chanfrein élément de renforcement et de la crête de limite est amenée en contact avec le chanfrein du manchon,
l'angle de crête (a) du premier chanfrein (45a) de la bague de synchroniseur (40) est supérieur à un angle de crête (y) du chanfrein (25) du manchon (21), l'angle de crête (β) du second chanfrein (45b) de la bague de synchroniseur (40) est inférieur à l'angle de crête (y) du chanfrein (25) du manchon (21),
**caractérisé en ce que** :
le premier chanfrein (45a) est formé par trois faces (45a, 43, 45a) et ayant des limites des trois faces en tant que crêtes (46, 46),
le second chanfrein (45b) est formé par trois faces (45b, 43, 45b) et ayant des limites des trois faces en tant que crêtes (46, 46), et a un angle de crête (β) inférieur à un angle de crête (α) du premier chanfrein (45a).

2. Dispositif de synchroniseur (10) pour une transmission selon la revendication 1, dans lequel :
une différence θ1 (= α - Υ) entre l'angle de crête (α) du premier chanfrein (45a) de la bague de synchroniseur (40) et l'angle de crête 5 (Υ) du chanfrein (25) du manchon (21) est de préférence de 0,1° à 30°.

3. Dispositif de synchroniseur (10) pour une transmission selon la revendication 1, dans lequel :
une différence θ2 (= Υ - β) entre l'angle de crête (β) du second chanfrein (45b) de la bague de synchroniseur (40) et l'angle de crête (Υ) du chanfrein (25) du manchon (21) est de préférence de 0,1° à 10°.

4. Dispositif de synchroniseur (10) pour une transmission selon l'une quelconque des revendications 1 à 3, dans lequel :
chaque crête du chanfrein (45) de la bague de synchroniseur (40) est de préférence formée selon une courbe R avec un rayon de 0,1 mm à 10 mm.
